# EUROPÄISCHE PATENTSCHRIFT

(11) **EP 3 803 180 B1**
(45) Veröffentlichungstag und Bekanntmachung des Hinweises auf die Patenterteilung: **08.03.2023**
(21) Anmeldenummer: 19727350.1
(22) Anmeldetag: 27.05.2019
(51) Int. Cl.: F16L 33/01, F16L 33/30, F16L 39/00, F16L 39/02

(54) **ANSCHLUSSVORRICHTUNG FÜR EINE SCHLAUCHANORDNUNG**
COUPLING DEVICE FOR A HOSE ARRANGEMENT
DISPOSITIF DE RACCORDEMENT POUR UN ENSEMBLE DE TUYAUX SOUPLES

(30) Priorität: 06.06.2018 DE 102018208953
(43) Veröffentlichungstag der Anmeldung: 14.04.2021
(73) Patentinhaber: Fränkische Industrial Pipes GmbH & Co. KG, 97486 Königsberg (DE)
(72) Erfinder: GEUSS, Markus, 97486 Königsberg (DE); SEMERÁD, Ondreij, Trebíc 67401 (CZ)
(74) Vertreter: Herzog, Markus
(86) Internationale Anmeldenummer: PCT/EP2019/063610
(87) Internationale Veröffentlichungsnummer: WO 2019/233798

(56) Entgegenhaltungen:
- EP-A1- 2 012 052
- FR-A1- 3 065 274
- US-A- 3 986 732
- US-A1- 2010 276 026

## Beschreibung

Die vorliegende Erfindung betrifft eine Anschlussvorrichtung für eine mehrere Kammern aufweisende Schlauchanordnung.

Im Stand der Technik sind Schlauchanordnungen bekannt, bei welchen ein Schlauch mit einem ersten Durchmesser in einem Schlauch mit einem zweiten Durchmesser, welcher größer ist als der ersten Durchmesser, angeordnet ist. Derartige Schlauchanordnungen werden beispielsweise dafür verwendet, dass ein in dem inneren Schlauch strömendes Fluid, beispielsweise SCR, durch ein in dem äußeren Schlauch, das heißt in einem Raum zwischen dem äußeren Schlauch und dem inneren Schlauch, strömendes Heizmittel erwärmt wird.

Dabei kann eine Montage des inneren und des äußeren Schlauchs mit einer Anschlussvorrichtung, welche die Schlauchanordnung mit einer übergeordneten Baugruppe, beispielsweise einer Fluidquelle, verbindet, sehr aufwändig sein. Insbesondere dann, wenn ein Ende der Schlauchanordnung bereits mit einer entsprechenden Anschlussvorrichtung verbunden ist und die Schläuche in ihrer Stauchungrichtung im Wesentlichen starr sind, ist eine Verbindung der Schlauchanordnung an ihrem anderen Ende mit einer weiteren Anschlussvorrichtung, welche üblicherweise eine zumindest abschnittsweise gleichzeitige Verbindung des inneren und des äußeren Schlauchs mit der Anschlussvorrichtung erfordert, mit hohem Aufwand und vielen Fehlbedienungsmöglichkeiten verbunden.

Beispielsweise ist aus der DE 10 2016 007 887 A1 eine Schlauchanordnung bekannt, welche an ihren Enden mit entsprechenden Anschlussvorrichtungen verbindbar ist. Dabei ist es erforderlich, dass der innere Schlauch eine kürzere Länge aufweist als der äußere Schlauch, da eine entsprechende Verbindungsfläche der Anschlussvorrichtung für den inneren Schlauch weiter in die Schlauchanordnung hineinragt als eine entsprechende Verbindungsfläche der Anschlussvorrichtung für den äußeren Schlauch. Gerade bei einem bereits verbundenen Ende der Schlauchanordnung mit einer Anschlussvorrichtung, ist der innere Schlauch mit der zweiten Anschlussvorrichtung sozusagen "blind" zu verbinden, da der äußere Schlauch und der äußere Abschnitt der offenbarten Anschlussvorrichtung eine Sicht auf die Verbindung des inneren Schlauchs mit der Anschlussvorrichtung verhindern.

Des Weiteren offenbart die US 2010 276 026 A1, welche als nächstliegender Stand der Technik erachtet wird, eine Anschlussvorrichtung, welche dazu eingerichtet ist, zwei ineinander angeordnete Schläuche zu verbinden, wobei ein erster und zumindest teilweise ein zweiter Fluiddurchgang durch die Anschlussvorrichtung verlaufen.

Ferner sind aus der US 3 986 732 A, der FR 3 065 274 A1 sowie der EP 2 012 052 A1 derartige Anschlussvorrichtungen bekannt.

Es ist daher die Aufgabe der vorliegenden Erfindung, eine Anschlussvorrichtung bereitzustellen, welche in einer einfachen und sicheren Weise mit einer derartigen Schlauchanordnung verbindbar ist.

Diese Aufgabe wird durch eine Anschlussvorrichtung nach Anspruch 1 gelöst.

Durch die erfindungsgemäße Anschlussvorrichtung ist es möglich, zunächst den ersten Leitungsverbinder mit einem inneren Schlauch einer eingangs erwähnten Schlauchanordnung zu verbinden, wobei der innere Schlauch gut sichtbar und beispielsweise für Werkzeuge gut zugänglich verbleibt. Nach erfolgreicher Montage des ersten Leitungsverbinders mit dem inneren Schlauch kann der äußere Schlauch mit dem zweiten Leitungsverbinder verbunden werden, wobei der zweite Leitungsverbinder auf den ersten Leitungsverbinder bis zu dem Montagezustand der beiden Leitungsverbinder aneinander aufschiebbar ist. Eine derart "entkoppelte" Verbindung der Anschlussvorrichtung mit dem inneren Schlauch und anschließend dem äußeren Schlauch vereinfacht den Montageaufwand, insbesondere bei der Verwendung von Maschinen zum Aufpressen der Leitungsverbinder mit der Schlauchanordnung, drastisch und kann daher Fehlerquellen, welche zu einer Beschädigung oder fehlerhaften Montage der Schlauchanordnung führen können, reduzieren.

Durch die erfindungsgemäße Ausbildung der Anschlussvorrichtung können der innere Schlauch und der äußere Schlauch vor einer Montage mit der Anschlussvorrichtung thermoverformt werden, wodurch eine Elastizität insbesondere in Stauchungsrichtung des Schlauchs stark vermindert werden kann, und dennoch einfach und beschädigungsfrei mit der Anschlussvorrichtung verbunden werden.

Der erste Leitungsverbinder und/oder der zweite Leitungsverbinder können/kann aus einem Kunststoff, insbesondere aus einem für ein Spritzgussverfahren geeigneten Kunststoff, wie beispielsweise PE oder PA, insbesondere PA66 und PA6 mit Glasfaserverstärkung (GF30), oder aus einem Metall, wie beispielsweise Edelstahl, hergestellt sein.

Am Schlauchanschluss kann dabei eine Struktur, beispielsweise eine Verzahnungsstruktur, angeordnet sein, welche ein Abziehen des Schlauchs von dem Schlauchanschluss erschweren oder sogar verhindern kann. Die Struktur kann zum Beispiel in Form von am Außenumfang des Schlauchanschlusses um diesen in Umfangsrichtung verlaufenden Widerhaken, das heißt Vorsprüngen mit einer steil ansteigenden und einer flach ansteigenden Flanke, ausgebildet sein. Die Struktur kann insbesondere dazu eingerichtet sein, nach einem Thermoumformen des Schlauchs mit diesem in Eingriff zu treten.

Erfindungsgemäß verläuft der erste Fluiddurchgang und der zweite Fluiddurchgang koaxial zueinander. In diesem Fall durchsetzt der erste Fluiddurchgang den zweiten Fluiddurchgang vollständig, das heißt der erste Fluiddurchgang ist vollständig innerhalb des zweiten Fluiddurchgangs angeordnet, sofern der zweite Fluiddurchgang als geschlossener Ring ausgebildet ist. Die Koaxialität der beiden Fluiddurchgänge, welche auch als "Fluidräume" bezeichnet werden, kann bedeuten, dass auch das Aufschieben des zweiten Leitungsverbinders auf den ersten Leitungsverbinder entlang der beiden zusammenfallenden Mittelachsen des ersten Fluiddurchgangs und des zweiten Fluiddurchgangs verläuft. Der gesamte zweite Fluiddurchgang ist koaxial zu dem ersten Fluiddurchgang. Das heißt, die Koaxialität der beiden Fluiddurchgänge setzt sich von den Schlauchanschlüssen der Anschlussvorrichtung bis in die übergeordnete Baugruppe fort.

Als "übergeordnete Baugruppe" wird hier zusammenfassend eine Einheit bezeichnet, an welche die erfindungsgemäße Anschlussvorrichtung angeschlossen wird, selbst wenn dem Anschluss an diese Einheit nachfolgend, der erste Fluiddurchgang zu einer ersten übergeordneten Baugruppe und der zweite Fluiddurchgang zu einer von der ersten Baugruppe getrennten zweiten übergeordneten Baugruppe verlaufen mag.

in einer Weiterbildung der vorliegenden Erfindung kann der erste Leitungsverbinder an seinem dem Schlauchanschluss entgegengesetzten Ende einen Kopplungsanschluss für eine Kopplung des ersten Leitungsverbinders mit einer übergeordneten, nicht zu der Anschlussvorrichtung gehörenden Baugruppe aufweisen, und kann der zweite Leitungsverbinder an seinem dem Schlauchanschluss entgegengesetzten Ende einen Kopplungsanschluss für eine Kopplung des zweiten Leitungsverbinders mit der übergeordneten, nicht zu der Anschlussvorrichtung gehörenden Baugruppe aufweisen, und der Kopplungsanschluss des ersten Leitungsverbinders kann koaxial zu dem Kopplungsanschluss des zweiten Leitungsverbinders verlaufen. Der erste Leitungsverbinder und der zweite Leitungsverbinder können somit derart beschrieben werden, dass sie an ihrem einen Ende jeweils einen Schlauchanschluss und an ihrem anderen Ende jeweils einen Kopplungsanschluss aufweisen. Der zweite Leitungsverbinder kann auf den ersten Leitungsverbinder beginnend mit dem Ende des zweiten Leitungsverbinders, an welchem der Schlauchanschluss angeordnet ist, auf den ersten Leitungsverbinder von dessen Kopplungsanschluss-Ende in Richtung des Schlauchanschluss-Endes des ersten Leitungsverbinders aufgeschoben werden, so dass im Montagezustand des ersten Leitungsverbinders und des zweiten Leitungsverbinders aneinander die Schlauchanschlüsse des ersten Leitungsverbinders und des zweiten Leitungsverbinders in eine gemeinsame erste Richtung der Anschlussvorrichtung weisen und die Kopplungsanschlüsse des ersten Leitungsverbinders des zweiten Leitungsverbinders in eine gemeinsame zweite Richtung der Anschlussvorrichtung weisen, welche insbesondere der ersten Richtung entgegengesetzt sein kann.

Der erste Leitungsverbinder und der zweite Leitungsverbinder können dem jeweiligen Kopplungsanschluss zugeordnet wenigstens eine ringförmige Nut aufweisen, welche den ersten Leitungsverbinder bzw. den zweiten Leitungsverbinder jeweils in einer Umfangsrichtung an seiner Außenseite umgibt. Eine derartige ringförmige Nut kann dazu eingerichtet sein, einen O-Ring als ein Dichtungselement aufzunehmen, welches zwischen dem ersten Leitungsverbinder und dem Anschluss an der übergeordneten Baugruppe bzw. zwischen dem zweiten Leitungsverbinder und dem Anschluss an der übergeordneten Baugruppe wirkt.

Der zweite Leitungsverbinder kann wenigstens einen federnden Steg aufweisen, welcher dazu eingerichtet ist, in dem Montagezustand des ersten und des zweiten Leitungsverbinders aneinander, mit wenigstens einer Ausnehmung des ersten Leitungsverbinders einzugreifen, um so eine Verlagerung des zweiten Leitungsverbinders relativ zu dem ersten Leitungsverbinder in einer einer Aufschubrichtung entgegengesetzten Richtung zu verhindern. Der zweite Leitungsverbinder kann an seinem dem Kopplungsanschluss zugeordneten Ende den wenigstens einen federnden Steg, vorteilhafterweise drei oder vier federnde Stege, aufweisen, welche nach radial innen in den zweiten Fluiddurchgang vorstehen. Der wenigstens eine federnde Steg kann dabei derart ausgebildet sein, dass er ein Aufschieben des zweiten Leitungsverbinders auf den ersten Leitungsverbinder erlaubt, indem er sich dabei nach radial außen verformt. Sobald der zweite Leitungsverbinder vollständig auf den ersten Leitungsverbinder aufgeschoben ist, das heißt der wenigstens eine federnde Steg des zweiten Leitungsverbinders eine entsprechende Ausnehmungen an dem ersten Leitungsverbinder erreicht, kann sich der wenigstens eine federnde Steg, aufgrund der Elastizität des Materials, aus welchem der Steg gebildet ist, in Richtung seiner ursprünglichen Ausbildung, das heißt nach radial innen, bewegen, um so mit der Ausnehmung einzugreifen. Der Eingriff zwischen dem wenigstens einen federnden Steg und der Ausnehmung kann dabei derart ausgebildet sein, beispielsweise durch Vorsehen einer entsprechenden Kante oder eines Hinterschnitts, das ein Abziehen des zweiten Leitungsverbinders von dem ersten Leitungsverbinder nicht zerstörungsfrei möglich ist.

Es sei an dieser Stelle erwähnt, dass in einer analogen Weise natürlich auch der erste Leitungsverbinder mit dem wenigstens einen federnden Steg ausgebildet sein kann und der zweite Leitungsverbinder mit der entsprechenden Ausnehmung ausgebildet sein kann. Die oben beschriebenen Merkmale sind hierfür entsprechend von dem einen Leitungsverbinder auf den jeweils anderen Leitungsverbinder zu übertragen.

Der erste Leitungsverbinder kann wenigstens einen Anschlag aufweisen, welcher dazu eingerichtet ist, gegen wenigstens einen Gegenanschlag des zweiten Leitungsverbinders anzuliegen, um so eine Verlagerung des ersten Leitungsverbinders relativ zu dem zweiten Leitungsverbinder in der Aufschubrichtung zu verhindern. Durch das Zusammenwirken des Anschlags mit dem Gegenanschlag kann eine maximale Position definiert werden, bis zu welcher der zweite Leitungsverbinder auf den ersten Leitungsverbinder aufgeschoben werden kann. Die Position, in welcher der Anschlag des ersten Leitungsverbinders mit dem Gegenanschlag des zweiten Leitungsverbinders zusammenwirkt, kann mit derjenigen Position zusammenfallen, in welcher der wenigstens eine federnde Steg mit der entsprechenden Ausnehmung in Eingriff treten kann. Auf diese Weise kann eine Verlagerung des zweiten Leitungsverbinders relativ zu dem ersten Leitungsverbinder sowohl in Aufschubrichtung des zweiten Leitungsverbinders auf den ersten Leitungsverbinder als auch entgegen dieser bewirkt werden.

Das Element des ersten Leitungsverbinders, welches den Anschlag des ersten Leitungsverbinders bildet, kann, beispielsweise an einer Fläche, welche der Anschlagfläche mit dem Gegenanschlag des zweiten Leitungsverbinders entgegengesetzt ist, auch als Anschlag für einen auf den Schlauchanschluss des ersten Leitungsverbinders aufzubringenden Schlauch dienen.

Vorteilhafterweise kann der erste Leitungsverbinder wenigstens drei, vorteilhafterweise vier, Abstandshalter umfassen, welche dazu eingerichtet sind, an ihrem freien Ende mit dem zweiten Leitungsverbinder in Kontakt zu treten, um so einen radialen Abstand des zweiten Leitungsverbinders relativ zu dem ersten Leitungsverbinder zu definieren. Die Abstandshalter können beispielsweise als einfache stiftartige Vorsprünge ausgebildet sein, welche von dem ersten Leitungsverbinder nach radial außen ragen. Dabei können die Abstandhalter in einer Umfangsrichtung um den ersten Leitungsverbinder herum gleichmäßig, im Beispiel von drei Abstandshaltern beispielsweise im Abstand von 120°, verteilt sein. Die Abstandhalter können insbesondere gleich lang ausgebildet sein oder die Erstreckung der Abstandhalter nach radial außen kann so ausgelegt sein, dass eine Distanz von der Mittelachse des ersten Fluiddurchgangs des ersten Leitungsverbinders bis zu dem freien Ende eines jeweiligen Abstandhalters in radialer Richtung für jeden Abstandshalter im Wesentlichen identisch ist. Somit kann der zweite Leitungsverbinder bzw. der den zweiten Fluiddurchgang definierende Abschnitt des zweiten Leitungsverbinders in einer koaxialen Weise zu dem ersten Fluiddurchgang gehalten werden. Im Ergebnis kann durch das Vorsehen der Abstandhalter ein ringförmiger zweiter Fluiddurchgang gebildet werden, welcher einen regelmäßigen, insbesondere einheitlichen, Querschnitt aufweist.

Ferner kann der erste Leitungsverbinder wenigstens eine Führungsrippe umfassen, welche dazu eingerichtet ist, mit einer Führungsausnehmung des zweiten Leitungsverbinders einzugreifen, um den zweiten Leitungsverbinder rotatorisch gegenüber dem ersten Leitungsverbinder zu sichern. Es sei erwähnt, dass ein einzelner Vorsprung an dem ersten Leitungsverbinder sowohl die Funktion eines Abstandhalters als auch die Funktion einer Führungsrippe erfüllen kann.

Natürlich können auch hier die Abstandhalter bzw. die wenigstens eine Führungsrippe zwischen den beiden Leitungsverbindern vertauscht in einer analogen Weise angeordnet sein.

In einer Weiterbildung der vorliegenden Erfindung kann der zweite Leitungsverbinder eine Sicherungseinrichtung aufweisen, welche wenigstens einen federnd gelagerten Vorsprung umfasst, und welche dazu eingerichtet ist, den zweiten Leitungsverbinder an der übergeordneten Baugruppe dadurch zu sichern, dass der wenigstens eine Vorsprung der Sicherungseinrichtung mit einer entsprechenden Ausnehmung an der übergeordneten Baugruppe eingreift. Die Sicherungseinrichtung des zweiten Leitungsverbinders kann mit der übergeordneten Baugruppe eine Schnappverbindung ausbilden. Die Sicherungseinrichtung kann dabei ferner derart mit der übergeordneten Baugruppe zusammenwirken, dass die erfindungsgemäße Anschlussvorrichtung nicht nur translatorisch sondern auch rotatorisch relativ zu der übergeordneten Baugruppe gesichert ist.

Dabei kann die Sicherungseinrichtung einen ovalen Ring umfassen, an dessen Innenseite, insbesondere auf einer kurzen Achse des ovalen Rings liegend, der wenigstens eine Vorsprung der Sicherungseinrichtung angeordnet ist, wobei der ovale Ring elastisch ausgebildet ist und dazu eingerichtet ist, dass eine Verkürzung einer langen Achse des ovalen Rings, insbesondere aufgrund eines Zusammendrückens des ovalen Rings, eine Verlängerung der kurzen Achse des ovalen Rings hervorruft, so dass der wenigstens eine Vorsprung der Sicherungseinrichtung von der entsprechenden Ausnehmung an der übergeordneten Baugruppe außer Eingriff tritt. Hierdurch kann die Sicherungseinrichtung von der übergeordneten Baugruppe lösbar ausgebildet sein. Insbesondere an Abschnitten, welche an einer äußeren Umfangsfläche des ovalen Rings und auf der langen Achse des ovalen Rings liegend angeordnet sind, können Griffflächen angeordnet sein, welche zum einen das Zusammendrücken des ovalen Rings erleichtern können und zum anderen einem Bediener intuitiv anzeigen können, an welcher Stelle der ovale Ring zusammenzudrücken ist, um die Anschlussvorrichtung von der übergeordneten Baugruppe zu lösen.

Die oben erwähnten Begriffe der "kurzen Achse" und der "langen Achse" beziehen sich auf einen unbelasteten Zustand des ovalen Rings, das heißt einen Zustand des ovalen Rings, in welchem keine äußere Kraft eine Deformation des ovalen Rings hervorruft.

Der ovale Ring und der daran angeordnete wenigstens eine Vorsprung können aus einem elastischen Material, wie beispielsweise einem Kunststoff, insbesondere PA66 und PA6 mit Glasfaserverstärkung (GF30), oder einem Metall, insbesondere dem selben Material wie ein restlicher Teil des zweiten Leitungsverbinders, hergestellt sein. Der zweite Leitungsverbinder kann einstückig aus einem einzigen Material hergestellt sein.

Vorteilhafterweise können der erste Leitungsverbinder und der zweite Leitungsverbinder in ihrem Montagezustand frei von einem Dichtungselement sein, welches dazu eingerichtet ist, sowohl mit dem ersten Leitungsverbinder als auch mit dem zweiten Leitungsverbinder zusammenzuwirken und/oder frei von einer Aufnahmeeinrichtung sein, welche dazu ausgelegt ist, ein Dichtungselement aufzunehmen, welches dazu eingerichtet ist, sowohl mit dem ersten Leitungsverbinder als auch mit dem zweiten Leitungsverbinder zusammenzuwirken. Das bedeutet, aufgrund der erfindungsgemäßen Anordnung des ersten Leitungsverbinders und des zweiten Leitungsverbinders aneinander sind der erste Fluiddurchgang und der zweite Fluiddurchgang derart ausgebildet, dass sie in die übergeordnete Baugruppe hinein geführt werden können, ohne dass es einer Abdichtung zwischen dem ersten Leitungsverbinder und dem zweiten Leitungsverbinder bedarf.

Als "sowohl mit dem ersten Leitungsverbinder als auch mit dem zweiten Leitungsverbinder zusammenwirkend" ist ein Dichtungselement zu verstehen, welches einen zwischen dem ersten Leitungsverbinder und dem zweiten Leitungsverbinder gebildeten Raum abdichtet.

In einer vorteilhaften Ausführungsform kann der Schlauchanschluss des zweiten Leitungsverbinders, in seinem Montagezustand am ersten Leitungsverbinder, entlang einer Längsachse des ersten Fluiddurchgangs gesehen, vollständig neben dem Schlauchanschluss des ersten Leitungsverbinders angeordnet sein. Das heißt, in einer radialen Richtung gesehen, liegt keine Überlappung zwischen dem Schlauchanschluss des ersten Leitungsverbinders und dem Schlauchanschluss des zweiten Leitungsverbinders vor. In anderen Worten liegt das Ende des inneren Schlauchs, welches mit dem Schlauchanschluss des ersten Leitungsverbinders verbunden ist, in einer Richtung entlang der Mittelachse des ersten Fluiddurchgangs gesehen, vor dem Ende des zweiten Leitungsverbinders, welches dem Schlauchanschluss des zweiten Leitungsverbinders benachbart ist, im Montagezustand der Anschlussvorrichtung.

Ferner kann der Kopplungsanschluss des zweiten Leitungsverbinders, in seinem Montagezustand am ersten Leitungsverbinder, entlang einer Achse des ersten Fluiddurchgangs gesehen, vollständig neben dem Kopplungsanschluss des ersten Leitungsverbinders angeordnet sein. Auch hier kann in einer radialen Richtung gesehen keine Überlappung des Kopplungsanschlusses des ersten Leitungsverbinders und des Kopplungsanschlusses des zweiten Leitungsverbinders vorliegen. Zur Definition der "Nebeneinanderanordnung" sei auf die entsprechende Beschreibung der nebeneinander angeordneten Schlauchanschlüsse verwiesen.

In einem weiteren Aspekt betrifft die vorliegende Erfindung eine Leitungsanordnung, umfassend eine Schlauchanordnung, welche einen äußeren Schlauch, und einen inneren Schlauch, welcher in dem äußeren Schlauch angeordnet ist, umfasst, und wenigstens eine Anschlussvorrichtung, welche wenigstens eines der oben erwähnten Merkmale aufweist, wobei der innere Schlauch mit dem ersten Leitungsverbinder verbunden ist und der äußere Schlauch mit dem zweiten Leitungsverbinder verbunden ist. Die erfindungsgemäße Leitungsanordnung kann dabei insbesondere derart ausgebildet sein, dass ein erster Fluiddurchgang, welcher im Inneren des inneren Schlauchs und des ersten Leitungsverbinders definiert ist, und ein zweiter Fluiddurchgang, welcher durch einen Raum definiert ist, welcher zwischen dem inneren und dem äußeren Schlauch bzw. zwischen dem ersten und dem zweiten Leitungsverbinder liegt, über die gesamte Längserstreckung der Leitungsanordnung, an radial überlappenden Abschnitten betrachtet, im Wesentlichen koaxial verlaufen.

Eine beispielhafte Anwendung der erfindungsgemäßen Leitungsanordnung ist das Fördern von sogenannten Blow-By-Gasen in dem inneren Schlauch und das Anlegen eines Unterdrucks an dem Fluidraum des äußeren Schlauchs, welcher mit einer Diagnoseeinrichtung verbunden ist, um bei einer Erfassung von Blow-By-Gasen in dem Fluidraum des äußeren Schlauchs eine Leckage des inneren Schlauchs bestimmen zu können.

Insbesondere kann es die Ausbildung der erfindungsgemäßen Leitungsanordnung ermöglichen, dass sowohl der äußere als auch der innere Schlauch ein biegbarer, aber in Längserstreckungsrichtung im Wesentlichen starrer Schlauch sein kann. Das bedeutet, dass es die vorliegende Erfindung, im Vergleich zum Stand der Technik, bei welchem derartige starre Schläuche nicht oder nur mit sehr großem Aufwand mit Anschlussvorrichtungen verbunden werden können, ermöglicht, auch ineinander angeordnete Schläuche mit Anschlussvorrichtungen zu verbinden, welche in ihrer Längserstreckungsrichtung nicht stauchbar und/oder dehnbar sind.

In Bezug auf weitere Merkmale der erfindungsgemäßen Leitungsanordnung sei auf die obige Beschreibung zu der erfindungsgemäßen Anschlussvorrichtung verwiesen, welche ebenso in Bezug auf die erfindungsgemäße Leitungsanordnung Anwendung findet.

In noch einem weiteren Aspekt betrifft die vorliegende Erfindung ein Verfahren zum Verbinden einer Schlauchanordnung, umfassend wenigstens einen äußeren und einen inneren Schlauch, mit einer Anschlussvorrichtung gemäß Anspruch 1, vorzugsweise auch gemäß den abhängigen Ansprüchen, wobei das Verfahren die Schritte umfasst:
Bereitstellen des äußeren Schlauchs,
Bereitstellen des inneren Schlauchs, welcher in dem äußeren Schlauch angeordnet ist,
Bereitstellen eines ersten Leitungsverbinders, welcher an seinem einen Ende einen Schlauchanschluss zum Anschluss an einen Schlauch aufweist und in seinem Inneren einen ersten Fluiddurchgang definiert,
Verbinden des ersten Leitungsverbinders mit dem inneren Schlauch durch Einschieben des Schlauchanschlusses des ersten Leitungsverbinders in den inneren Schlauch,
Bereitstellen eines zweiten Leitungsverbinders, welcher an seinem einen Ende einen Schlauchanschluss zum Anschluss an einen Schlauch aufweist und zur Verbindung mit dem ersten Leitungsverbinder eingerichtet ist, wobei der zweite Leitungsverbinder, in seinem Montagezustand am ersten Leitungsverbinder, den ersten Leitungsverbinder so umgibt, dass zwischen dem ersten Leitungsverbinder und dem zweiten Leitungsverbinder ein zweiter Fluiddurchgang erzeugt ist, welcher von dem ersten Fluiddurchgang fluidisch getrennt ist,
Verbinden des zweiten Leitungsverbinders mit dem ersten Leitungsverbinder durch Aufschieben des zweiten Leitungsverbinders auf den ersten Leitungsverbinder von dessen Ende her, welches dem Schlauchanschluss des ersten Leitungsverbinders entgegengesetzt ist,
Verbinden des zweiten Leitungsverbinders mit dem äußeren Schlauch durch Einschieben des zweiten Leitungsverbinders in den äußeren Schlauch.

Somit ermöglicht es das erfindungsgemäße Verfahren, zunächst den ersten Leitungsverbinder an dem inneren Schlauch vollständig zu montieren und erst im Anschluss daran den zweiten Leitungsverbinder mit dem äußeren Schlauch zu verbinden. Hierdurch kann ein Montageaufwand zur Verbindung einer derartigen Schlauchanordnung mit einer Anschlussvorrichtung und somit auch das Risiko einer Beschädigung der Schlauchanordnung und/oder der Anschlussvorrichtung deutlich reduziert werden.

In Bezug auf weitere denkbare Merkmale des erfindungsgemäßen Verfahrens sei auf die obigen Beschreibungen mit Bezug auf die erfindungsgemäße Anschlussvorrichtung und/oder auf die erfindungsgemäße Leitungsanordnung verwiesen, welche für das erfindungsgemäße Verfahren in analoger Weise Anwendung finden/findet.

Das erfindungsgemäße Verfahren kann ferner derart ausgebildet sein, dass der Schritt des Verbindens des zweiten Leitungsverbinders mit dem ersten Leitungsverbinder umfassen kann, dass wenigstens ein federnder Steg des zweiten Leitungsverbinders mit einer Ausnehmung des ersten Leitungsverbinders in Eingriff tritt, um so eine Verlagerung des zweiten Leitungsverbinders relativ zu dem ersten Leitungsverbinder in einer einer Aufschubrichtung entgegengesetzten Richtung zu verhindern. Gemäß dieser Weiterbildung kann der zweite Leitungsverbinders so weit auf den ersten Leitungsverbinders aufgeschoben werden, bis der wenigstens eine federnde Steg des zweiten Leitungsverbinders mit der Ausnehmung des ersten Leitungsverbinders in Eingriff tritt. Üblicherweise wird dieses Ineingrifftreten von einer akustischen Rückkopplung in Form eines "Klick"-Geräuschs begleitet. Nach dem Ineingrifftreten des wenigstens einen federnden Stegs mit der entsprechenden Ausnehmung kann eine Verlagerung in einer zu der Aufschubrichtung entgegengesetzten Richtung durch das Zusammenwirken des wenigstens einen federnden Stegs mit einer Kante der Ausnehmung verhindert sein. Somit haben der erste Leitungsverbinder und der zweite Leitungsverbinder ihren Montagezustand aneinander erreicht.

Ferner kann der Schritt des Verbindens des zweiten Leitungsverbinders mit dem ersten Leitungsverbinder umfassen, dass wenigstens drei, vorteilhafterweise vier, Abstandshalter an ihrem freien Ende mit dem zweiten Leitungsverbinder in Kontakt zu treten, um so einen radialen Abstand des zweiten Leitungsverbinders relativ zu dem ersten Leitungsverbinder zu definieren. Durch das Kontaktieren der freien Enden der Abstandshalter mit einem inneren Abschnitt des zweiten Leitungsverbinders kann eine radiale Ausrichtung des zweiten Leitungsverbinders an dem ersten Leitungsverbinder definiert werden, so dass beispielsweise der zweite Fluiddurchgang einen gleichmäßigen Querschnitt aufweisen kann.

Wie bereits weiter oben beschrieben, kann der erste Leitungsverbinder mit Führungsrippen versehen sein, welche mit entsprechenden Ausnehmungen, insbesondere Nuten, des zweiten Leitungsverbinders eingreifen, um so eine Rotation des zweiten Leitungsverbinders relativ zu dem ersten Leitungsverbinder zu verhindern.

Im Folgenden wird die vorliegende Erfindung anhand eines Ausführungsbeispiels im Detail mit Bezug auf die begleitenden Zeichnungen beschrieben werden, in welchen
- Fig. 1: eine Seitenquerschnittsansicht eines beispielhaften ersten Leitungsverbinders darstellt;
- Fig. 2: eine perspektivische Ansicht des ersten Leitungsverbinders aus Fig. 1 darstellt;
- Fig. 3: eine Seitenquerschnittsansicht eines beispielhaften zweiten Leitungsverbinders darstellt;
- Fig. 4: eine perspektivische Ansicht des zweiten Leitungsverbinders aus Fig. 3 darstellt;
- Fig. 5: eine Aufsicht auf das in Fig. 3 links dargestellte Ende des zweiten Leitungsverbinders darstellt;
- Fig. 6: eine Seitenquerschnittsansicht einer Ausführungsform einer erfindungsgemäßen Anschlussvorrichtung darstellt, umfassend den ersten Leitungsverbinder aus Figuren 1 und 2 und den zweiten Leitungsverbinder aus Figuren 3 bis 5;
- Fig. 7: eine weitere Seitenquerschnittsansicht der Anschlussvorrichtung aus Fig. 6 darstellt;
- Fig. 8: eine beispielhafte Ausführungsform einer erfindungsgemäßen Leitungsanordnung darstellt, umfassend die Anschlussvorrichtung aus Fig. 5 und Fig. 6.

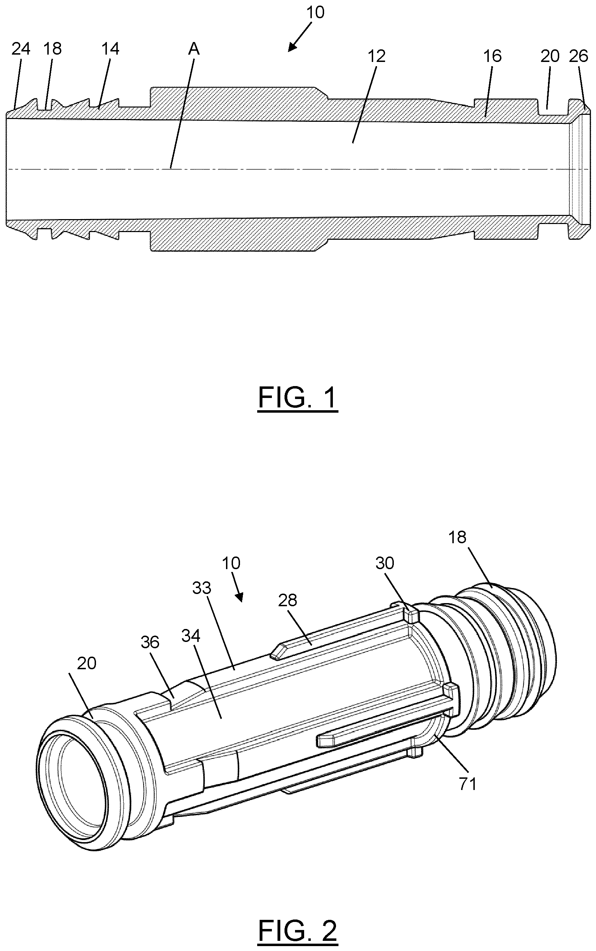

In Fig. 1 ist ein erster Leitungsverbinder allgemein mit dem Bezugszeichen 10 bezeichnet. Der erste Leitungsverbinder 10 weist in seinem Inneren einen ersten Fluiddurchgang 12 auf. Der erste Fluiddurchgang 12 ist im Wesentlichen zylindrisch und weist eine Mittelachse A auf.

An seinem in Fig. 1 links dargestellten Ende weist der erste Leitungsverbinder 10 einen Schlauchanschluss 14 auf, welcher dazu eingerichtet ist, mit einem Schlauch verbunden zu werden.

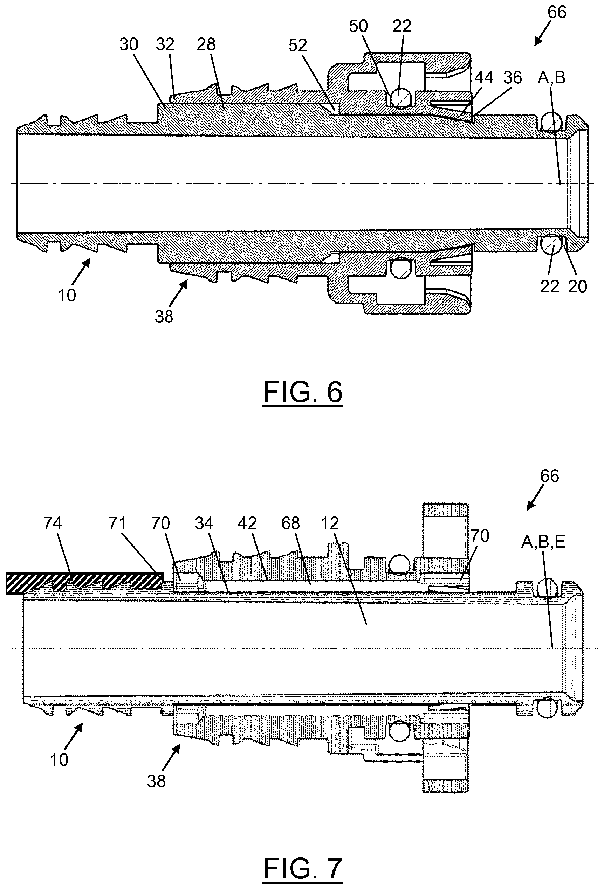

An seinem in Fig. 1 rechts dargestellten, das heißt dem Ende des Schlauchanschlusses 14 des ersten Leitungsverbinders 10 entgegengesetzten, Ende weist der erste Leitungsverbinder 10 einen Kopplungsanschluss 16 auf, welcher dazu eingerichtet ist, mit einer übergeordneten Baugruppe verbunden zu werden. An dem Schlauchanschluss 14 und an dem Kopplungsanschluss 16 weist der erste Leitungsverbinder 10 jeweils eine ringförmige Nut 18 und 20 auf, welche einen Außenumfang des ersten Leitungsverbinders 10 umgibt (siehe Fig. 2). Die beiden Nuten 18, 20 sind dazu eingerichtet, jeweils einen O-Ring 22 (von welchen einer in Fig. 6 dargestellt ist) aufzunehmen, welcher dazu eingerichtet ist, als ein Dichtungselement zwischen dem ersten Leitungsverbinder 10 und dem mit dem Schlauchanschluss 14 verbundenen Schlauch bzw. zwischen dem ersten Leitungsverbinder 10 und der übergeordneten Baugruppe zu wirken.

Den beiden Längsenden des ersten Leitungsverbinders 10 benachbart weißt der erste Leitungsverbinder 10 jeweils eine Einführungsschräge 24 und 26 auf, welche dazu geeignet ist, ein Einführen des ersten Leitungsverbinder 10 in einen Schlauch bzw. in einen Anschluss der übergeordneten Baugruppe zu erleichtern.

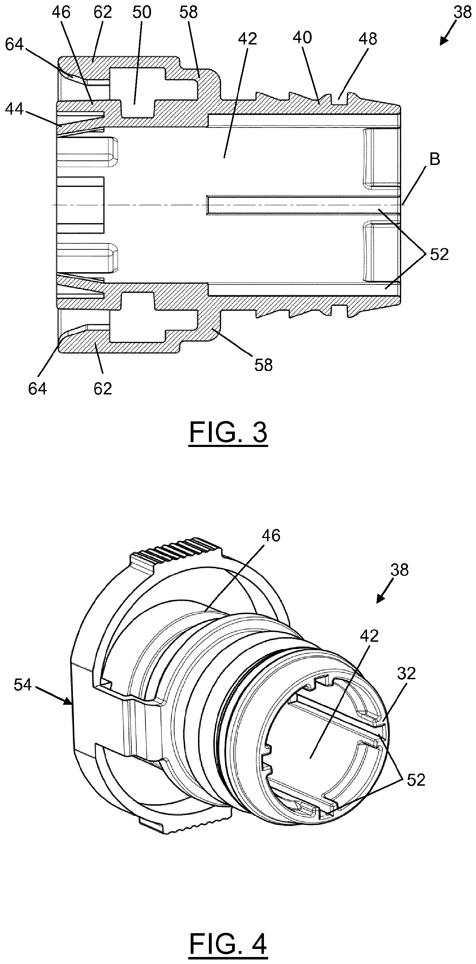

Wie in Fig. 2 zu erkennen ist, weist der erste Leitungsverbinder 10 an seinem Außenumfang vier Führungsrippen 28 auf, welche über einen Außenumfang des ersten Leitungsverbinder 10 in einer Umfangsrichtung gleichmäßig verteilt sind. Die Führungsrippen 28 erstrecken sich in einer zu der Mittelachse A parallelen Richtung. An ihrem dem Schlauchanschluss 14 des ersten Leitungsverbinders 10 benachbarten Ende weisen die Führungsrippen 28 jeweils einen Anschlag 30 auf, welcher dazu eingerichtet ist, gegen einen Gegenanschlag 32 (siehe Fig. 4) anzuliegen. Die Führungsrippen 28 sind in dem dargestellten Ausführungsbeispiel an einem jeweiligen freien Ende eines Abstandshalters 33, das heißt in Richtung einer radialen Verlängerung eines jeweiligen Abstandshalters 33, angeordnet. Die radial äußeren Flächen der Abstandshalter 33, welche hier den Flächen entsprechen, auf denen die Führungsrippen 28 angeordnet sind, sind dazu eingerichtet, mit einer Innenwandung des zweiten Leitungsverbinders 38 in Kontakt zu treten, um eine radiale Ausrichtung des zweiten Leitungsverbinders 38 relativ zu dem ersten Leitungsverbinder 10, insbesondere im Sinne einer Zentrierung, festzulegen (s. Fig. 6).

Zwischen jeweils zwei Abstandshaltern 33 sind längliche Passagen 34 ausgebildet. Die Wirkungsweise der Passagen 34 wird weiter unten mit Bezug auf Fig. 7 beschrieben werden. Es sei jedoch bereits an dieser Stelle erwähnt, dass die Passagen 34 zu ihnen benachbarten Abschnitten des ersten Leitungsverbinders 10 vertieft, aber ebenso plan oder sogar erhöht ausgebildet sein können, solange ein Abstand zwischen den Passagen 33 und einem in radialer Richtung benachbarten Abschnitt des zweiten Leitungsverbinders 38 eingehalten wird. Im dargestellten Beispiel sind die Passagen 34 vertieft ausgebildet, um so eine Materialreduktion am ersten Leitungsverbinder 10 im Bereich der Passagen 33 in Form einer reduzierten Wandstärke erhalten zu können.

In Fig. 2 sind ferner an der Außenseite des ersten Leitungsverbinders 10 Ausnehmungen 36 in einem jeweiligen Abstandshalter 33 zu erkennen. Die Ausnehmungen 36 sind dazu eingerichtet, als Vertiefungen und Hinterschnitte einer Schnappverbindung zu wirken (siehe weiter unten). Die Ausnehmungen 36 sind in dem in Fig. 2 dargestellten Beispiel auf einer Linie mit jeweils zugeordneten Führungsrippen 28, wobei diese Linie zu der Mittelachse A parallel ausgerichtet ist. Demgemäß ergibt sich eine gleiche Anzahl an Ausnehmungen 36 und an Führungsrippen 28.

Mit Bezug nun auf Fig. 3 ist ein zweiter Leitungsverbinder 38 in einer Seitenquerschnittsansicht dargestellt. Der zweite Leitungsverbinder 38 weist an einem Ende einen Schlauchanschluss 40 auf, welcher dazu eingerichtet ist, mit einem Schlauch verbunden zu werden. In seinem Inneren weist der zweite Leitungsverbinder 38 einen im Wesentlichen zylindrischen Durchgang 42 auf. Der Durchgang 42 definiert eine Mittelachse B, welche sich in Längsrichtung durch den Durchgang 42 erstreckt.

An seinem dem Schlauchanschluss 40 entgegengesetzten Ende weist der zweite Leitungsverbinder 38 eine Mehrzahl von federnden Stegen 44 auf, welche mit dem zweiten Leitungsverbinder 38 einstückig ausgebildet sind und nach radial innen, das heißt in den Durchgang 42 hinein, vorstehen. In dem in Fig. 3 dargestellten Ausführungsbeispiel weist der zweite Leitungsverbinder 38 vier federnde Stege 44 auf, welche in einer Umfangsrichtung an einer inneren Fläche des zweiten Leitungsverbinders 38 gleichmäßig verteilt angeordnet sind.

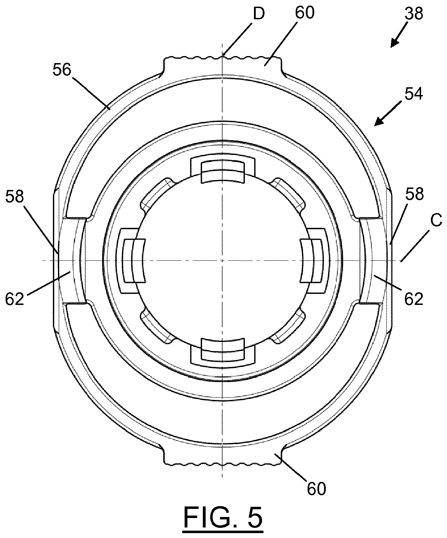

Den federnden Stegen 44 radial außen benachbart weist der zweite Leitungsverbinder 38 einen Kopplungsanschluss 46 auf, welcher dazu eingerichtet ist, den zweiten Leitungsverbinder 38 mit einer übergeordneten Baugruppe zu koppeln. Analog zu dem ersten Leitungsverbinder 10 weist der zweite Leitungsverbinder 38 an seinem Schlauchanschluss 40 und an seinem Kopplungsanschluss 46 jeweils eine Nut 48 und 50 auf, welche dazu eingerichtet ist, einen O-Ring aufzunehmen (siehe Fig. 5 oder Fig. 6).

An der den Durchgang 42 definierenden Innenwandung des zweiten Leitungsverbinders 38 weist dieser vier Führungsausnehmungen 52 auf, welche dazu eingerichtet sind, mit den Führungsrippen 28 des ersten Leitungsverbinders 10 in Eingriff zu treten. Entsprechend sind auch die Führungsausnehmungen 52 in Umfangsrichtung des zweiten Leitungsverbinders 38 bzw. des Durchgangs 42 gleichmäßig verteilt. Die Führungsausnehmungen 52 erstrecken sich in einer zu der Mittelachse B parallelen Richtung mindestens über die gleiche Länge wie die Führungsrippen 28, vorteilhafterweise über eine größere Länge als die Führungsrippen 28. In dem in Fig. 3 dargestellten Ausführungsbeispiel des zweiten Leitungsverbinders 38 erstrecken sich die Führungsausnehmungen 52 über mehr als die Hälfte der Längserstreckung des zweiten Leitungsverbinders 38 in Richtung der Mittelachse B.

Wie in Fig. 4 zu erkennen ist, beginnen die Führungsausnehmungen 52 an einer planen Endfläche des zweiten Leitungsverbinders 38, welche als der oben beschriebene Gegenanschlag 32 des zweiten Leitungsverbinders 38 fungiert. Von dieser planen Fläche erstrecken sich die Führungsausnehmungen 52 an der Wandung des Durchgangs 42 in einer zu der Mittelachse B des Durchgangs 42 parallelen Richtung.

Wie in Fig. 4 ferner zu erkennen ist, ist dem Kopplungsanschluss 46 des zweiten Leitungsverbinders 38 eine Sicherungseinrichtung 54 zugeordnet, welche nun mit Bezug auf Fig. 5 in größerem Detail beschrieben werden wird. Die Sicherungseinrichtung 54 ist dazu eingerichtet, den zweiten Leitungsverbinder 38 an der übergeordneten Baugruppe zu sichern. Die Sicherungseinrichtung 54 weist einen ovalen Ring 56 auf, welcher an zwei Abschnitten 58 des ovalen Rings 56, welche auf einer kurzen Achse C des ovalen Rings 56 liegen (siehe auch Fig. 3), mit der Wandung des zweiten Leitungsverbinders 38 verbunden ist. Der ovale Ring 56 weist an zwei Abschnitten, welche auf einer langen Achse D des ovalen Rings 56 liegen, Griffflächen 60 auf, welche dazu geeignet sind, von einem Benutzer ergriffen zu werden, um den ovalen Ring 56 entlang der langen Achse D zusammenzudrücken. Die Art der Verbindung 58 des ovalen Rings 56 mit dem restlichen zweiten Leitungsverbinder 38 erlaubt, dass auf ein Zusammendrücken der beiden Griffflächen 60 hin, das heißt ein Bewegen der Griffflächen 60 aufeinander zu, eine Verkürzung der langen Achse D und eine Verlängerung der kurzen Achse C bewirkt wird. Durch das Verlängern der kurzen Achse C werden die Abschnitte 58 des ovalen Rings 56 entlang der Achse C voneinander weg bewegt.

An einer Innenseite des ovalen Rings 56 sind an den Abschnitten 58 des ovalen Rings 56 nach radial innen ragende Vorsprünge 62 angeordnet (siehe auch Fig. 3), welche dazu eingerichtet sind, mit entsprechenden Ausnehmungen an der übergeordneten Baugruppe einzugreifen, um den zweiten Leitungsverbinder 38 im Sinne einer Schnappverbindung an der übergeordneten Baugruppe zu sichern. Wird nun die kurze Achse C des ovalen Rings 56 durch Zusammendrücken der Griffflächen 60 verlängert, so treten die Vorsprünge 62 der Sicherungseinrichtung 54 außer Eingriff mit den entsprechenden Ausnehmungen an der übergeordneten Baugruppe, so dass der zweite Leitungsverbinder 38 von der übergeordneten Baugruppe gelöst werden kann. Werden die Griffflächen 60 nicht mehr zusammengedrückt, so verformt sich die Sicherungseinrichtung 54 bzw. der ovale Ring 56 in den in Fig. 5 dargestellten unbelasteten Zustand zurück. Für ein erleichtertes Koppeln des zweiten Leitungsverbinders 38 mit der übergeordneten Baugruppe weisen die Vorsprünge 62 der Sicherungseinrichtung 54 Einführungsschrägen 64 auf (siehe Fig. 3).

In Fig. 6 ist der Montagezustand des ersten Leitungsverbinders 10 und des zweiten Leitungsverbinders 38 aneinander dargestellt. In diesem Montagezustand bilden der erste Leitungsverbinder 10 und der zweite Leitungsverbinder 38 eine erfindungsgemäße Anschlussvorrichtung 66. Wie in Fig. 6 zu erkennen ist, ist der zweite Leitungsverbinder 38 derart vollständig auf den ersten Leitungsverbinder 10 von dessen Ende her, welches den Kopplungsanschluss 16 aufweist, aufgeschoben. In diesem Montagezustand stehen die federnden Stege 44 des zweiten Leitungsverbinders 38 mit den Ausnehmungen 36 des ersten Leitungsverbinders 10 in Eingriff. Ferner liegen die Anschläge 30 des ersten Leitungsverbinders gegen die Gegenanschläge 32, welche eine gemeinsame plane Fläche des zweiten Leitungsverbinders 38 aufweisen, an. Die Führungsrippen 28 des ersten Leitungsverbinders 10 stehen mit den entsprechenden Führungsausnehmungen 52 des zweiten Leitungsverbinders 38 in Eingriff. Es ist in Fig. 6 dabei klar zu erkennen, dass die Führungsausnehmungen 52 des zweiten Leitungsverbinders 38 länger sind als die Länge der Führungsrippen 28 des ersten Leitungsverbinders 10, bis zu welcher der zweite Leitungsverbinder 38 auf diese aufgeschoben werden kann. Außerdem ist in Fig. 6 ersichtlich, dass in einer zu den Mittelachsen A und B senkrechten Richtung das freie Ende eines jeweiligen Abstandshalters 33 mit einer Innenwandung des zweiten Leitungsverbinders 38 in Kontakt steht, so dass die Ausrichtung des zweiten Leitungsverbinders 38 relativ zu dem ersten Leitungsverbinder 10 in einer zu der Mittelachse A bzw. der Mittelachse B senkrechten Richtung durch die Abstandshalter 33 festgelegt ist.

In der Nut 20 des ersten Leitungsverbinders 10 und in der Nut 50 des zweiten Leitungsverbinders 38 ist jeweils ein O-Ring 22 angeordnet, welcher als Dichtungselement zwischen dem ersten Leitungsverbinder 10 und der übergeordneten Baugruppe bzw. dem zweiten Leitungsverbinder 38 und der übergeordneten Baugruppe wirkt. Die Mittelachsen A und B fallen in der in Fig. 6 dargestellten Ausführungsform zusammen.

In Fig. 7 ist die Anschlussvorrichtung 66 entlang einer in Bezug auf die Schnittebene von Fig. 6 um die Mittelachse A um 45° gedrehten Schnittebene geschnittenen Ansicht dargestellt. Es ist in Fig. 7 zu erkennen, dass die in Umfangsrichtung zwischen den Abstandshaltern 33 des ersten Leitungsverbinders 10 angeordneten Passagen 34 des ersten Leitungsverbinders 10 mit der den Durchgang 42 definierenden Innenwandung des zweiten Leitungsverbinders 38 einen zweiten Fluiddurchgang 68 definieren. Gemäß den oben beschriebenen Ausbildungen des ersten Leitungsverbinders 10, der Passagen 34, des zweiten Leitungsverbinders 38 und des Durchgangs 42 verläuft der zweite Fluiddurchgang 68 konzentrisch zu dem ersten Fluiddurchgang 12, so dass der zweite Fluiddurchgang 68 eine mit den Mittelachsen A und B zusammenfallende Mittelachse E aufweist. Der zweite Fluiddurchgang 68 weist über seine gesamte Länge durch den zweiten Leitungsverbinder 38 hindurch einen im Wesentlichen ringförmigen Querschnitt auf, welcher jedoch von den Abstandshaltern 33 des ersten Leitungsverbinders 10 durchbrochen wird. An seinen beiden Enden weist der zweite Fluiddurchgang 68 in dem zweiten Leitungsverbinder 38 angeordnete Verbreiterungen 70 des zweiten Fluiddurchgangs 68 auf, welche die Strömungseigenschaften eines durch den zweiten Fluiddurchgang 68 strömenden Fluids verbessern können, da durch die Verbreiterungen 70 ein Vorsprung 71 umströmt werden kann, gegen welchen ein auf den ersten Leitungsverbinder 10 aufzuschiebender Schlauch anliegen kann, welcher in Fig. 7 an der oberen Hälfte des Schlauchanschlusses 14 des ersten Leitungsverbinders 10 als schraffierter Quader 74 dargestellt ist.

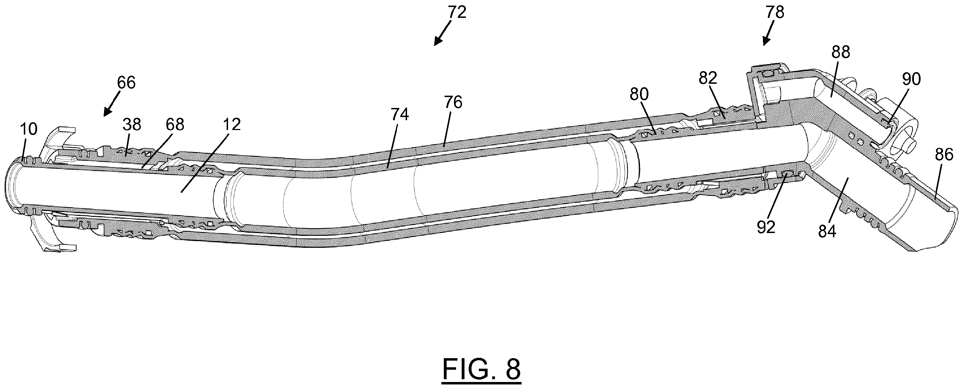

In Fig. 8 ist nun eine erfindungsgemäße Leitungsanordnung 72 dargestellt, welche einen inneren Schlauch 74 umfasst, welcher in einem äußeren Schlauch 76 angeordnet ist. An dem in Fig. 8 links dargestellten Ende sind der innere Schlauch 74 und der äußere Schlauch 76 mit einer erfindungsgemäßen Anschlussvorrichtung 66 verbunden, wie sie weiter oben im Detail beschrieben worden ist. Es ist dabei in Fig. 8 klar zu erkennen, dass sich der erste Fluiddurchgang 12 von dem Inneren des inneren Schlauchs 74 durch den ersten Leitungsverbinder 10 hindurch bis in eine übergeordnete Baugruppe (nicht dargestellt) erstreckt. Der zweite Fluiddurchgang 68 erstreckt sich von einem Raum, welcher zwischen dem inneren Schlauch 74 und dem äußeren Schlauch 76 gebildet ist und den inneren Schlauch 74 somit ringförmig umgibt, durch den zwischen dem ersten Leitungsverbinder 10 und dem zweiten Leitungsverbinder 38 gebildeten Raum hindurch bis in die übergeordnete Baugruppe. Der erste Fluiddurchgang 12 und der zweite Fluiddurchgang 68 erstrecken sich daher sowohl in der Schlauchanordnung, welche aus den Schläuchen 74 und 76 gebildet ist, als auch in der erfindungsgemäßen Anschlussvorrichtung 66 koaxial bis in die übergeordnete Baugruppe hinein.

An dem in Fig. 8 rechts dargestellten Ende des inneren Schlauchs 74 und des äußeren Schlauchs 76 ist eine weitere Anschlussvorrichtung 78 dargestellt, welche im Folgenden kurz beschrieben werden soll.

Die weitere Anschlussvorrichtung 78 weist einen ersten Schlauchanschluss 80, welcher mit dem inneren Schlauch 74 verbunden ist, und einen zweiten Schlauchanschluss 82 auf, welcher mit dem äußeren Schlauch 76 verbunden ist. Ein mit dem ersten Fluiddurchgang 12 in Verbindung stehender Fluiddurchgang 84 der weiteren Anschlussvorrichtung 78 führt von dem ersten Schlauchanschluss 80 der weiteren Anschlussvorrichtung 78 durch die weitere Anschlussvorrichtung 78 hindurch bis zu einem ersten Kopplungsanschluss 86 der weiteren Anschlussvorrichtung 78, welcher dazu eingerichtet ist, mit einem Anschluss einer weiteren übergeordneten Baugruppe (nicht dargestellt) verbunden zu werden. Ein mit dem zweiten Fluiddurchgang 68 in Verbindung stehender weiterer Fluiddurchgang 88 zweigt von einer ringförmigen Erweiterung des zweiten Fluiddurchgangs 68 zwischen dem äußeren Schlauch 76 und dem ersten Schlauchanschluss 80 der weiteren Anschlussvorrichtung 78 nach radial außen ab und verläuft dann parallel zu dem einen Fluiddurchgang 84 der weiteren Anschlussvorrichtung 78 bis zu einem weiteren Kopplungsende 90 der weiteren Anschlussvorrichtung 78, welches dazu eingerichtet ist, mit einem weiteren Anschluss der weiteren übergeordneten Baugruppe verbunden zu werden, welcher von dem einen Anschluss der weiteren übergeordneten Baugruppe getrennt an dieser angeordnet ist. An der weiteren Anschlussvorrichtung 78 ist ein Dichtungselement 92 angeordnet, welches zwischen zwei Teilen der weiteren Anschlussvorrichtung im Sinne eines ersten Leitungsverbinders und eines zweiten Leitungsverbinders wirkt, um einen dort dazwischen gebildeten Raum nach außen hin abzudichten.

## Patentansprüche

1. Anschlussvorrichtung (66) für eine mehrere Kammern aufweisende Schlauchanordnung, umfassend
einen ersten Leitungsverbinder (10), welcher an seinem einen Ende einen Schlauchanschluss (14) zum Anschluss an eine erste Kammer der Schlauchanordnung aufweist, und
einen zweiten Leitungsverbinder (38), welcher an seinem einen Ende einen Schlauchanschluss (40) zum Anschluss an eine zweite Kammer der Schlauchanordnung aufweist,
wobei der erste Leitungsverbinder (10) in seinem Inneren einen ersten Fluiddurchgang (12) definiert,
wobei der zweite Leitungsverbinder (38) und der erste Leitungsverbinder (10) in ihrem Montagezustand aneinander betriebsmäßig fest miteinander verbunden sind, in welchem der zweite Leitungsverbinder (38) den ersten Leitungsverbinder (10) so umgibt, dass zwischen dem ersten Leitungsverbinder (10) und dem zweiten Leitungsverbinder (38) ein zweiter Fluiddurchgang (68) erzeugt ist, welcher von dem ersten Fluiddurchgang (12) fluidisch getrennt ist,
wobei der Schlauchanschluss (14) des ersten Leitungsverbinders (10) und der Schlauchanschluss (40) des zweiten Leitungsverbinders (38) im Montagezustand auf der gleichen Seite der Anschlussvorrichtung (66) angeordnet sind, und
wobei der zweite Leitungsverbinder (38) auf den ersten Leitungsverbinder (10) von dessen Ende her aus einem vollständig getrennten Zustand in den Montagezustand aufschiebbar ist, welches dem Schlauchanschluss (14) des ersten Leitungsverbinders (10) entgegengesetzt ist,
**dadurch gekennzeichnet, dass** der erste Fluiddurchgang (12) und der gesamte zweite Fluiddurchgang (68) vollständig koaxial zueinander verlaufen.

2. Anschlussvorrichtung (66) nach Anspruch 1,
**dadurch gekennzeichnet, dass** der erste Leitungsverbinder (10) an seinem dem Schlauchanschluss (14) entgegengesetzten Ende einen Kopplungsanschluss (16) für eine Kopplung des ersten Leitungsverbinders (10) mit einer übergeordneten, nicht zu der Anschlussvorrichtung (66) gehörenden Baugruppe aufweist,
dass der zweite Leitungsverbinder (38) an seinem dem Schlauchanschluss (40) entgegengesetzten Ende einen Kopplungsanschluss (46) für eine Kopplung des zweiten Leitungsverbinders (38) mit der übergeordneten, nicht zu der Anschlussvorrichtung (66) gehörenden Baugruppe aufweist, und
dass der Kopplungsanschluss (16) des ersten Leitungsverbinders (10) koaxial zu dem Kopplungsanschluss (46) des zweiten Leitungsverbinders (38) verläuft.

3. Anschlussvorrichtung (66) nach Anspruch 1 oder 2,
**dadurch gekennzeichnet, dass** der zweite Leitungsverbinder (38) wenigstens einen federnden Steg (44) aufweist, welcher dazu eingerichtet ist, in dem Montagezustand des ersten (10) und des zweiten (38) Leitungsverbinders aneinander, mit wenigstens einer Ausnehmung (36) des ersten Leitungsverbinders (10) einzugreifen, um so eine Verlagerung des zweiten Leitungsverbinders (38) relativ zu dem ersten Leitungsverbinder (10) in einer einer Aufschubrichtung entgegengesetzten Richtung zu verhindern.

4. Anschlussvorrichtung (66) nach einem der vorhergehenden Ansprüche, **dadurch gekennzeichnet, dass** der erste Leitungsverbinder (10) wenigstens einen Anschlag (30) aufweist, welcher dazu eingerichtet ist, gegen wenigstens einen Gegenanschlag (32) des zweiten Leitungsverbinders (38) anzuliegen, um so eine Verlagerung des ersten Leitungsverbinders (10) relativ zu dem zweiten Leitungsverbinder (38) in einer bzw. der Aufschubrichtung zu verhindern.

5. Anschlussvorrichtung (66) nach einem der vorhergehenden Ansprüche, **dadurch gekennzeichnet, dass** der erste Leitungsverbinder (10) wenigstens drei, vorteilhafterweise vier, Abstandshalter (28) umfasst, welche dazu eingerichtet sind, an ihrem freien Ende mit dem zweiten Leitungsverbinder (38) in Kontakt zu treten, um so einen radialen Abstand des zweiten Leitungsverbinders (38) relativ zu dem ersten Leitungsverbinder (10) zu definieren.

6. Anschlussvorrichtung (66) nach einem der vorhergehenden Ansprüche, **dadurch gekennzeichnet, dass** der zweite Leitungsverbinder (38) eine Sicherungseinrichtung (54) aufweist, welche wenigstens einen federnd gelagerten Vorsprung (62) umfasst, und welche dazu eingerichtet ist, den zweiten Leitungsverbinder (38) an der übergeordneten Baugruppe dadurch zu sichern, dass der wenigstens eine Vorsprung (62) der Sicherungseinrichtung (54) mit einer entsprechenden Ausnehmung an der übergeordneten Baugruppe eingreift.

7. Anschlussvorrichtung (66) nach Anspruch 6,
**dadurch gekennzeichnet, dass** die Sicherungseinrichtung (54) einen ovalen Ring (56) umfasst, an dessen Innenseite, insbesondere auf einer kurzen Achse (C) des ovalen Rings (56) liegend, der wenigstens eine Vorsprung (62) der Sicherungseinrichtung (54) angeordnet ist, wobei der ovale Ring (56) elastisch ausgebildet ist und dazu eingerichtet ist, dass eine Verkürzung einer langen Achse (D) des ovalen Rings (56), insbesondere aufgrund eines Zusammendrückens des ovalen Rings (56), eine Verlängerung der kurzen Achse (C) des ovalen Rings (56) hervorruft, so dass der wenigstens eine Vorsprung (62) der Sicherungseinrichtung (54) von der entsprechenden Ausnehmung an der übergeordneten Baugruppe außer Eingriff tritt.

8. Anschlussvorrichtung (66) nach einem der vorhergehenden Ansprüche, **dadurch gekennzeichnet, dass** der erste Leitungsverbinder (10) und der zweite Leitungsverbinder (38) in ihrem Montagezustand frei von einem Dichtungselement sind, welches dazu eingerichtet ist, sowohl mit dem ersten Leitungsverbinder (10) als auch mit dem zweiten Leitungsverbinder (38) zusammenzuwirken und/oder frei von einer Aufnahmeeinrichtung sind, welche dazu ausgelegt ist, ein Dichtungselement aufzunehmen, welches dazu eingerichtet ist, sowohl mit dem ersten Leitungsverbinder (10) als auch mit dem zweiten Leitungsverbinder (38) zusammenzuwirken.

9. Anschlussvorrichtung (66) nach einem der vorhergehenden Ansprüche, **dadurch gekennzeichnet, dass** der Schlauchanschluss (40) des zweiten Leitungsverbinders (38), in seinem Montagezustand am ersten Leitungsverbinder (10), entlang einer Längsachse (A) des ersten Fluiddurchgangs (12) gesehen, vollständig neben dem Schlauchanschluss (14) des ersten Leitungsverbinders (10) angeordnet ist.

10. Leitungsanordnung (72), umfassend
eine Schlauchanordnung, welche
einen äußeren Schlauch (76), und
einen inneren Schlauch (74), welcher in dem äußeren Schlauch (76) angeordnet ist, umfasst, und
wenigstens eine Anschlussvorrichtung (66) nach einem der Ansprüche 1 bis 9,
wobei der innere Schlauch (74) mit dem ersten Leitungsverbinder (10) verbunden ist und der äußere Schlauch (76) mit dem zweiten Leitungsverbinder (38) verbunden ist.

11. Leitungsanordnung (72) nach Anspruch 10,
**dadurch gekennzeichnet, dass** sowohl der äußere (76) als auch der innere (74) Schlauch ein biegbarer, aber in Längserstreckungsrichtung im Wesentlichen starrer Schlauch ist.

12. Verfahren zum Verbinden einer Schlauchanordnung, umfassend wenigstens einen äußeren (76) und einen inneren (74) Schlauch, mit einer Anschlussvorrichtung (66) nach einem der Ansprüche 1 bis 9, wobei das Verfahren die Schritte umfasst:
Bereitstellen des äußeren Schlauchs (76),
Bereitstellen des inneren Schlauchs (74), welcher in dem äußeren Schlauch (76) angeordnet ist,
Bereitstellen eines ersten Leitungsverbinders (10), welcher an seinem einen Ende einen Schlauchanschluss (14) zum Anschluss an einen Schlauch aufweist und in seinem Inneren einen ersten Fluiddurchgang (12) definiert,
Verbinden des ersten Leitungsverbinders (10) mit dem inneren Schlauch (74) durch Einschieben des Schlauchanschlusses (14) des ersten Leitungsverbinders (10) in den inneren Schlauch (74),
Bereitstellen eines zweiten Leitungsverbinders (38), welcher an seinem einen Ende einen Schlauchanschluss (40) zum Anschluss an einen Schlauch aufweist und zur Verbindung mit dem ersten Leitungsverbinder (10) eingerichtet ist, wobei der zweite Leitungsverbinder (38), in seinem Montagezustand am ersten Leitungsverbinder (10), den ersten Leitungsverbinder (10) so umgibt, dass zwischen dem ersten Leitungsverbinder (10) und dem zweiten Leitungsverbinder (38) ein zweiter Fluiddurchgang (68) erzeugt ist, welcher von dem ersten Fluiddurchgang (12) fluidisch getrennt ist,
Verbinden des zweiten Leitungsverbinders (38) mit dem ersten Leitungsverbinder (10) durch Aufschieben des zweiten Leitungsverbinders (38) auf den ersten Leitungsverbinder (10) von dessen Ende her, welches dem Schlauchanschluss (14) des ersten Leitungsverbinders (10) entgegengesetzt ist,
Verbinden des zweiten Leitungsverbinders (38) mit dem äußeren Schlauch (76) durch Einschieben des zweiten Leitungsverbinders (38) in den äußeren Schlauch (76).

13. Verfahren nach Anspruch 12,
**dadurch gekennzeichnet, dass** der Schritt des Verbindens des zweiten Leitungsverbinders (38) mit dem ersten Leitungsverbinder (10) umfasst, dass wenigstens ein federnder Steg (44) des zweiten Leitungsverbinders (38) mit einer Ausnehmung (36) des ersten Leitungsverbinders (10) in Eingriff tritt, um so eine Verlagerung des zweiten Leitungsverbinders (38) relativ zu dem ersten Leitungsverbinder (10) in einer einer Aufschubrichtung entgegengesetzten Richtung zu verhindern.

14. Verfahren nach Anspruch 12 oder 13,
**dadurch gekennzeichnet, dass** der Schritt des Verbindens des zweiten Leitungsverbinders (38) mit dem ersten Leitungsverbinder (10) umfasst, dass wenigstens drei, vorteilhafterweise vier, Abstandshalter (28) an ihrem freien Ende mit dem zweiten Leitungsverbinder (38) in Kontakt zu treten, um so einen radialen Abstand des zweiten Leitungsverbinders (38) relativ zu dem ersten Leitungsverbinder (10) zu definieren.

## Claims

1. Attachment device (66) for a hose arrangement having a plurality of chambers, comprising
a first line connector (10) which has a hose connection (14) at one end thereof for connection to a first chamber of the hose arrangement, and
a second line connector (38) which has a hose connection (40) at one end thereof for connection to a second chamber of the hose arrangement,
wherein the first line connector (10) defines a first fluid passage (12) in its interior,
wherein the second line connector (38) and the first line connector (10) are operationally fixedly connected to one another in their assembled state, in which the second line connector (38) surrounds the first line connector (10) so that between the first line connector (10) and the second line connector (38) a second fluid passage (68) is created which is fluidically separated from the first fluid passage (12),
wherein the hose connection (14) of the first line connector (10) and the hose connection (40) of the second line connector (38) are arranged on the same side of the attachment device (66) in the assembled state, and
wherein the second line connector (38) can be pushed onto the first line connector (10) from its end, which is opposite to the hose connection (14) of the first line connector (10), from a completely separated state into the assembled state,
**characterised in that** the first fluid passage (12) and the entire second fluid passage (68) run completely coaxially with one another.

2. Attachment device (66) according to claim 1,
**characterised in that** the first line connector (10) has, at its end opposite the hose connection (14), a coupling connection (16) for coupling the first line connector (10) to a superordinate assembly not belonging to the attachment device (66),
that the second line connector (38) has, at its end opposite the hose connection (40), a coupling connection (46) for coupling the second line connector (38) to the superordinate assembly not belonging to the attachment device (66), and
that the coupling connection (16) of the first line connector (10) runs coaxially with the coupling connection (46) of the second line connector (38).

3. Attachment device (66) according to claim 1 or 2,
**characterised in that** the second line connector (38) has at least one springy web (44) which is adapted, in the assembled state of the first (10) and the second (38) line connector to one another, to engage with at least one recess (36) of the first line connector (10) so as to prevent a displacement of the second line connector (38) relative to the first line connector (10) in a direction opposite to a push-on direction.

4. Attachment device (66) according to one of the preceding claims,
**characterised in that** the first line connector (10) has at least one stop (30) which is adapted to rest against at least one counter-stop (32) of the second line connector (38) in order to prevent displacement of the first line connector (10) relative to the second line connector (38) in a or the push-on direction.

5. Attachment device (66) according to one of the preceding claims,
**characterised in that** the first line connector (10) comprises at least three, advantageously four, spacers (28) which are adapted to come into contact at their free end with the second line connector (38) so as to define a radial distance of the second line connector (38) relative to the first line connector (10).

6. Attachment device (66) according to one of the preceding claims,
**characterised in that** the second line connector (38) has a securing device (54) which comprises at least one spring-mounted projection (62) and which is adapted to secure the second line connector (38) on the superordinate assembly by the at least one projection (62) of the securing device (54) engaging with a corresponding recess on the superordinate assembly.

7. Attachment device (66) according to claim 6,
**characterised in that** the securing device (54) comprises an oval ring (56), on the inside of which, in particular lying on a short axis (C) of the oval ring (56), the at least one projection (62) of the securing device (54) is arranged, wherein the oval ring (56) is elastic and is adapted such that a shortening of a long axis (D) of the oval ring (56), in particular due to a compression of the oval ring (56), causes an extension of the short axis (C) of the oval ring (56) so that the at least one projection (62) of the securing device (54) disengages from the corresponding recess on the superordinate assembly.

8. Attachment device (66) according to one of the preceding claims,
**characterised in that** the first line connector (10) and the second line connector (38) are free from a sealing element in their assembled state, which sealing element is adapted to interact both with the first line connector (10) and the second line connector (38) and/or are free of a receiving apparatus which is designed to receive a sealing element which is adapted to interact both with the first line connector (10) and with the second line connector (38).

9. Attachment device (66) according to one of the preceding claims,
**characterised in that** the hose connection (40) of the second line connector (38), in its assembled state on the first line connector (10), viewed along a longitudinal axis (A) of the first fluid passage (12), is arranged completely next to the hose connection (14) of the first line connector (10).

10. Line arrangement (72), comprising
a hose arrangement which
comprises an outer hose (76), and
an inner hose (74) which is arranged in the outer hose (76), and
at least one attachment device (66) according to one of claims 1 to 9,
wherein the inner hose (74) is connected to the first line connector (10) and the outer hose (76) is connected to the second line connector (38).

11. Line arrangement (72) according to claim 10,
**characterised in that** both the outer (76) and the inner (74) hose are a bendable, but, in the longitudinal extension direction, substantially rigid hose.

12. Method for connecting a hose arrangement, comprising at least one outer (76) and one inner (74) hose, to an attachment device (66) according to one of claims 1 to 9, the method comprising the steps of:
providing the outer hose (76),
providing the inner hose (74) which is arranged in the outer hose (76),
providing a first line connector (10) which has a hose connection (14) at one end thereof for connection to a hose and defines a first fluid passage (12) in its interior,
connecting the first line connector (10) to the inner hose (74) by pushing the hose connection (14) of the first line connector (10) into the inner hose (74),
providing a second line connector (38) which has a hose connection (40) at one end thereof for connection to a hose and is adapted for connection to the first line connector (10), wherein the second line connector (38), in its assembled state on the first line connector (10), surrounds the first line connector (10) in such a way that a second fluid passage (68) is created between the first line connector (10) and the second line connector (38), which second fluid passage is fluidically separated from the first fluid passage (12),
connecting the second line connector (38) to the first line connector (10) by pushing the second line connector (38) onto the first line connector (10) from the end thereof which is opposite the hose connection (14) of the first line connector (10),
connecting the second line connector (38) to the outer hose (76) by pushing the second line connector (38) into the outer hose (76).

13. Method according to claim 12,
**characterised in that** the step of connecting the second line connector (38) to the first line connector (10) comprises at least one springy web (44) of the second line connector (38) engaging with a recess (36) of the first line connector (10) so as to prevent a displacement of the second line connector (38) relative to the first line connector (10) in a direction opposite to a push-on direction.

14. Method according to claim 12 or 13,
**characterised in that** the step of connecting the second line connector (38) to the first line connector (10) comprises at least three, advantageously four, spacers (28) coming into contact at their free end with the second line connector (38), so as to define a radial distance of the second line connector (38) relative to the first line connector (10).

## Revendications

1. Dispositif de raccordement (66) pour un agencement de tuyaux présentant plusieurs chambres, comprenant
un premier connecteur de conduit (10), qui présente à une de ses extrémités un raccord de tuyau (14) pour le raccordement à une première chambre de l'agencement de tuyaux, et
un deuxième connecteur de conduit (38) qui présente à une de ses extrémités un raccord de tuyau (40) pour le raccordement à une deuxième chambre de l'agencement de tuyaux,
dans lequel le premier connecteur de conduit (10) définit un premier passage de fluide (12) dans son intérieur,
dans lequel le deuxième connecteur de conduit (38) et le premier connecteur de conduit (10) sont reliés de manière opérationnelle l'un à l'autre dans leur état de montage, dans lequel le deuxième connecteur de conduit (38) entoure le premier connecteur de conduit (10) de sorte qu'un deuxième passage de fluide (68) est créé entre le premier connecteur de conduit (10) et le deuxième connecteur de conduit (38), lequel est séparé de manière fluidique du premier passage de fluide (12),
dans lequel le raccord de tuyau (14) du premier connecteur de conduit (10) et le raccord de tuyau (40) du deuxième connecteur de conduit (38) sont disposés à l'état de montage sur le même côté du dispositif de raccordement (66), et dans lequel le deuxième connecteur de conduit (38) peut être enfilé sur le premier connecteur de conduit (10) à partir de l'extrémité de celui-ci d'un état complètement séparé à l'état de montage, qui est opposé au raccord de tuyau (14) du premier connecteur de conduit (10),
**caractérisé en ce que** le premier passage de fluide (12) et l'ensemble du deuxième passage de fluide (68) sont entièrement coaxiaux.

2. Dispositif de raccordement (66) selon la revendication 1,
**caractérisé en ce que** le premier connecteur de conduit (10) présente, à son extrémité opposée au raccord de tuyau (14), un raccord de couplage (16) pour un couplage du premier connecteur de conduit (10) avec un module supérieur n'appartenant pas au dispositif de raccordement (66),
**en ce que** le deuxième connecteur de conduit (38) présente, à son extrémité opposée au raccord de tuyau (40), un raccord d'accouplement (46) pour un accouplement du deuxième connecteur de conduit (38) avec le module supérieur n'appartenant pas au dispositif de raccordement (66), et
**en ce que** la borne de couplage (16) du premier connecteur de conduit (10) s'étend coaxialement au raccord d'accouplement (46) du deuxième connecteur de conduit (38).

3. Dispositif de raccordement (66) selon la revendication 1 ou 2,
**caractérisé en ce que** le deuxième connecteur de conduit (38) comprend au moins une entretoise élastique (44) adaptée, dans l'état d'assemblage du premier (10) et du deuxième (38) connecteurs de ligne l'un à l'autre, pour venir en prise avec au moins un évidement (36) du premier connecteur de conduit (10), de manière à empêcher un déplacement du deuxième connecteur de conduit (38) par rapport au premier connecteur de conduit (10) dans une direction opposée à une direction de poussée.

4. Dispositif de raccordement (66) selon l'une des revendications précédentes, **caractérisé en ce que** le premier connecteur de conduit (10) comprend au moins une butée (30) agencée pour venir en appui contre au moins une contre-butée (32) du deuxième connecteur de conduit (38) de manière à empêcher un déplacement du premier connecteur de conduit (10) par rapport au deuxième connecteur de conduit (38) dans un ou le sens d'insertion.

5. Dispositif de raccordement (66) selon l'une des revendications précédentes, **caractérisé en ce que** le premier connecteur de conduit (10) comprend au moins trois, avantageusement quatre, entretoises (28) agencées pour venir en contact à leur extrémité libre avec le deuxième connecteur de conduit (38) de manière à définir une distance radiale du deuxième connecteur de conduit (38) par rapport au premier connecteur de conduit (10).

6. Dispositif de raccordement (66) selon l'une des revendications précédentes, **caractérisé en ce que** le deuxième connecteur de conduit (38) comprend un dispositif de sécurité (54) qui comprend au moins une saillie (62) montée élastiquement et qui est agencé pour sécuriser le deuxième connecteur de conduit (38) sur le module supérieur par le fait que ladite au moins une saillie (62) du dispositif de sécurité (54) s'engage avec un évidement correspondant sur le module supérieur.

7. Dispositif de raccordement (66) selon la revendication 6,
**caractérisé en ce que** le dispositif de sécurité (54) comprend une anneau ovale (56) sur le côté intérieur de laquelle, en particulier sur un axe court (C) de l'anneau ovale (56), est disposée ladite au moins une saillie (62) du dispositif de sécurité (54), dans lequel l'anneau ovale (56) est réalisée de manière élastique et est conçue à cet effet, qu'un raccourcissement d'un grand axe (D) de l'anneau ovale (56), en particulier en raison d'une compression de l'anneau ovale (56), provoque un allongement de l'axe court (C) de l'anneau ovale (56), de sorte que ladite au moins une saillie (62) du dispositif de sécurité (54) se dégage de l'évidement correspondant sur le module supérieur.

8. Dispositif de raccordement (66) selon l'une des revendications précédentes, **caractérisé en ce que** le premier connecteur de conduit (10) et le deuxième connecteur de conduit (38) sont dépourvus, dans leur état monté, d'un élément d'étanchéité apte à coopérer à la fois avec le premier connecteur de conduit (10) et le deuxième connecteur de conduit (38) et/ou sont dépourvus d'un moyen de réception adapté pour recevoir un élément d'étanchéité apte à coopérer à la fois avec le premier connecteur de conduit (10) et le deuxième connecteur de conduit (38).

9. Dispositif de raccordement (66) selon l'une des revendications précédentes, **caractérisé en ce que** le raccord de tuyau (40) du deuxième connecteur de conduit (38), dans son état monté sur le premier connecteur de conduit (10), vu selon un axe longitudinal (A) du premier passage de fluide (12), est entièrement juxtaposé au raccord de tuyau (14) du premier connecteur de conduit (10).

10. Agencement de conduits (72) comprenant
un agencement de tuyaux, comprenant
un tuyau externe (76), et
un tuyau interne (74) disposé dans le tuyau externe (76), et
au moins un dispositif de raccordement (66) selon l'une des revendications 1 à 9,
dans lequel le tuyau interne (74) est connecté au premier connecteur de conduit (10) et le tuyau externe (76) est connecté au deuxième connecteur de conduit (38).

11. Agencement de conduits (72) selon la revendication 10,
**caractérisé en ce que** le tuyau externe (76) et le tuyau interne (74) sont tous deux des tuyaux flexibles, mais sensiblement rigides dans la direction d'extension longitudinale.

12. Procédé de raccordement d'un agencement de tuyaux comprenant au moins un tuyau externe (76) et un tuyau interne (74) avec un dispositif de raccordement (66) selon l'une des revendications 1 à 9, le procédé comprenant les étapes suivantes :
mettre à disposition le tuyau externe (76),
mettre à disposition le tuyau interne (74) qui est disposé dans le tuyau externe (76),
mettre à disposition un premier connecteur de conduit (10) ayant un raccord de tuyau (14) à une extrémité de celui-ci pour le raccordement à un tuyau et définissant un premier passage de fluide (12) à l'intérieur de celui-ci,
raccorder le premier connecteur de conduit (10) au tuyau interne (74) en insérant le raccord de tuyau (14) du premier connecteur de conduit (10) dans le tuyau interne (74),
mettre à disposition un deuxième connecteur de conduit (38) qui présente à l'une de ses extrémités un raccord de tuyau (40) pour le raccordement à un tuyau et qui est adapté pour être raccordé au premier connecteur de conduit (10), dans lequel le deuxième connecteur de conduit (38), dans son état monté sur le premier connecteur de conduit (10), entoure le premier connecteur de conduit (10) de telle sorte qu'un deuxième passage de fluide (68) est créé entre le premier connecteur de conduit (10) et le deuxième connecteur de conduit (38), lequel est séparé de manière fluidique du premier passage de fluide (12),
raccorder le deuxième connecteur de conduit (38) au premier connecteur de conduit (10) en faisant glisser le deuxième connecteur de conduit (38) sur le premier connecteur de conduit (10) à partir de l'extrémité de celui-ci qui est opposée au raccord de tuyau (14) du premier connecteur de conduit (10), raccorder le deuxième connecteur de conduit (38) au tuyau externe (76) en insérant le deuxième connecteur de conduit (38) dans le tuyau externe (76).

13. Procédé selon la revendication 12,
**caractérisé en ce que** l'étape de raccordement du deuxième connecteur de conduit (38) au premier connecteur de conduit (10) comprend l'engagement d'au moins une entretoise élastique (44) du deuxième connecteur de conduit (38) dans un évidement (36) du premier connecteur de conduit (10) de manière à empêcher un déplacement du deuxième connecteur de conduit (38) par rapport au premier connecteur de conduit (10) dans une direction opposée à une direction d'insertion.

14. Procédé selon la revendication 12 ou 13,
**caractérisé en ce que** l'étape de raccordement du deuxième connecteur de conduit (38) au premier connecteur de conduit (10) comprend la mise en contact d'au moins trois, avantageusement quatre, entretoises (28) à leur extrémité libre avec le deuxième connecteur de conduit (38) de manière à définir une distance radiale du deuxième connecteur de conduit (38) par rapport au premier connecteur de conduit (10).
